# EUROPÄISCHE PATENTANMELDUNG

(11) **EP 0 674 333 A2**
(43) Veröffentlichungstag der Anmeldung: **27.09.1995**
(21) Anmeldenummer: 95100697.2
(22) Anmeldetag: 19.01.1995
(51) Int. Cl.: H01H 83/14, H01F 38/30

(54) **Fehlerstromschutzschalter**

(30) Priorität: 23.03.1994 DE 4410076
(71) Anmelder: VALENTRON AG, CH-9050 Appenzell (CH)
(72) Erfinder: Weiss, Dirk, D-86438 Kissing (DE)
(74) Vertreter: Reinhard - Skuhra - Weise & Partner

(57) **Zusammenfassung**

Ein Fehlerstromschutzschalter, insbesondere für Speisekreise in Zügen, weist einen Ferritkern auf, welcher einen Luftspalt zur Aufnahme eines Sensors enthält. Innerhalb des Ferritkerns sind gegeneinander isolierte Stromschienen angeordnet, von welchen eine Stromschiene mittig zum Ferritkern und die beiden weiteren Stromschienen mit im wesentlichen U-förmigem Profil einander überlappend und die mittige Stromschiene einschließend vorgesehen sind.

## Beschreibung

Die Erfindung betrifft einen Fehlerstromschutzschalter, insbesondere für Speisekreise in Zügen, gemäß dem Oberbegriff des Patentanspruchs 1.

Grenzüberschreitend fahrende Züge, insbesondere deren Lokomotiven, können so ausgelegt sein, daß sie in unterschiedlichen Netzen fahren können. Insbesondere bei Zügen, die über das Euro-Tunnel zwischen Frankreich und Großbritannien verkehren sollen, besteht das Problem, daß solche Züge in Bereichen mit unterschiedlichen Netzen fahren sollen. So ist in Großbritannien nördlich von London ein Schienenüberwachungssystem vorhanden, das zur Feststellung einer Position eines fahrenden Zuges dient. Ein derartiges Schienenüberwachungssystem basiert beispielsweise auf der Widerstandsmessung, wobei der Widerstand zwischen den beiden Schienen ermittelt wird. Ein derartiges Schienenüberwachungssystem würde gestört oder beschädigt werden, wenn in unkontrollierter Weise von der Lokomotive oder über den Zug Ströme auf die Schiene abgeleitet würden. Ein solches Ereignis kann sich dann ergeben, wenn infolge der üblichen Speisung von Verbrauchern wie Heizung oder dergleichen von der Oberleitung her ein Kurzschluß auf der Seite eines Verbrauchers auftritt, weil in einem derartigen Fall ein Strom über die Karosserie von dem Gleichstromspeisenetz in die Schiene fließen könnte.

Der Erfindung liegt die Aufgabe zugrunde, einen Fehlerstromschutzschalter zu schaffen, der das Abfließen von Strömen aus dem Gleichstromspeisenetz von Zügen zur Schiene hin verhindert.

Diese Aufgabe wird erfindungsgemäß durch die im kennzeichnenden Teil des Patentanspruchs 1 angegebenen Merkmale gelöst.

Weitere Ausgestaltungen des Fehlerstromschutzschalters ergeben sich aus den Unteransprüchen.

Der erfindungsgemäße Fehlerstromschutzschalter findet Anwendung in dem Gleichstromspeisenetz bei Zügen bzw. Lokomotiven, läßt sich aber generell auch in Wechselstromnetzen verwenden.

Die Auslegung des Fehlerstromschutzschalters ist derart getroffen, daß bei Strömen von etwa 1000 A Über- oder Unterschreitungen in der Größenordnung von beispielsweise 3 A feststellbar sind und zu einer Aktivierung des Fehlerstromschutzschalters führen.

Im folgenden wird der erfindungsgemäße Fehlerstromschutzschalter anhand der Zeichnung zur Erläuterung weiterer Merkmale und Vorteile beschrieben. Es zeigen:
- Fig. 1: ein Schaltbild zur Verdeutlichung des Einsatzes des erfindungsgemäßen Fehlerstromschutzschalters im Gleichstromspeisenetz eines Zuges,
- Fig. 2: eine prinzipielle Darstellung des erfindungsgemäßen Fehlerstromschutzschalters zur Erläuterung der Funktion,
- Fig. 3: eine Draufsicht auf den erfindungsgemäßen Fehlerstromschutzschalter,
- Fig. 4: eine schematische Darstellung des Fehlerstromschutzschalters mit zwei integrierten Ferritkernen bei einer Verdopplung seines Aufbaus, und
- Fig. 5: eine Darstellung zur Erläuterung des Magnetflusses bei einer Anordnung, bei welcher die drei Stromschienen nebeneinanderliegend im Ferritkern angeordnet sind.

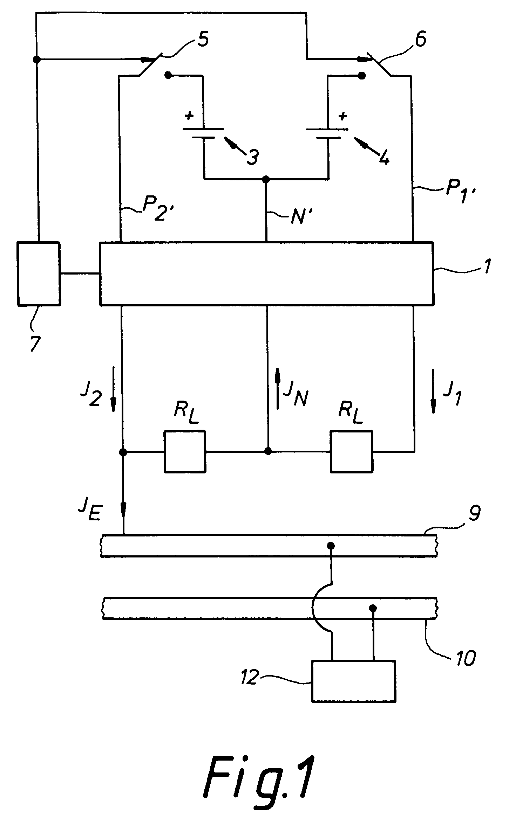

Fig. 1 zeigt den Einsatz eines erfindungsgemäßen Fehlerstromschutzschalters in einem Gleichstromspeisenetz eines Zuges. Der Fehlerstromschutzschalter ist in Fig. 1 mit 1 bezeichnet und ist in die mit P1' und P2' bezeichneten Stromschienen sowie den Neutralleiter N' eingebaut. Die über die Oberleitung erfolgende Speisung ist symbolisch durch die Bezugszeichen 3 und 4 angedeutet. Die Speisung erfolgt über Schalter 5 und 6, welche durch den Fehlerstromschutzschalter 1 über ein Relais 7 oder dergleichen ansteuerbar sind. Verbraucher wie Heizung oder dergleichen sind in Fig. 1 mit R_{L} bezeichnet. Die über die Stromschienen P1', P2' fließenden Ströme liegen im Anwendungsbeispiel bei 1000 A, so daß bei Vorliegen von I1=I2=1000 A über den Neutralleiter N' ein Strom von 2000 A fließt. Bei Auftreten eines Kurzschlusses könnte ein Strom I_{E} über den Zug bzw. die Karosserie in eine der mit 9, 10 bezeichneten Schienen fließen, auf welchen der Zug fährt, wodurch ein den Widerstand zwischen den Schienen 9, 10 erfassendes Schienenüberwachungsgerät 12 zerstört werden könnte.

Der erfindungsgemäße Fehlerstromschutzschalter ist mit einer Schaltschwelle von beispielsweise 3 bis 4 A konzipiert, so daß bei Überschreiten die Summe der Ströme I₁, I₂ um 3 bis 4 A der Fehlerstromschutzschalter aktiviert wird und über ein Relais 7 oder dergleichen die Schalter 5,6 öffnet, wodurch ein Stromfluß vom Speisekreis 3,4 her zu den Verbrauchern R_{L} unterbrochen wird. Im Kurzschlußfalle wird damit das Auftreten eines Fehlerstromes I_{E} zu den Schienen 9, 10 hin verhindert.

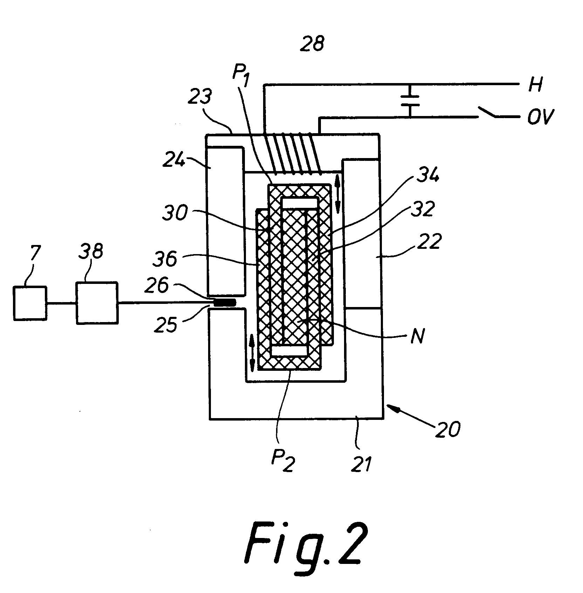

Fig. 2 zeigt im einzelnen den Aufbau des erfindungsgemäßen Fehlerstromschutzschalters. Der Fehlerstromschutzschalter weist wenigstens einen Ferritkern 20 auf, der bei der dargestellten Ausführungsform aus einer im wesentlichen U-förmigen Basis 21 und drei I-Teilen 22, 23, 24 besteht. Zwischen dem U-Abschnitt 21 und dem Teil 24 ist ein Luftspalt 25 festgelegt, der zur Aufnahme eines Sensors 26, vorzugsweise eines Hall-Sensors dient, welcher das durch die noch zu beschreibenden Stromschienen erzeugte Magnetfeld H erfaßt. Gemäß Fig. 2 stellt das Teil 23 ein Joch mit vorzugsweise T-förmiger Gestalt dar, das mit einer Entmagnetisierungswicklung 28 versehen sein kann.

Die Stromschienen P1, P2 und N befinden sich innerhalb des Ferritkerns 20, wobei die Stromschiene N (Neutralleiter) im Schnitt die Form eines Rechteckes hat, wie dies an sich bekannt ist, und von den Stromschienen P1, P2 umgeben ist. Die Stromschienen P1, P2 haben im Bereich des Ferritkerns 20 im Vergleich zur Stromschiene N im wesentlichen U-förmiges Profil, infolgedessen ein Schenkel 30 der Stromschiene P1 an der in Fig. 2 linken Fläche der Stromschiene N anliegt. Während ein Schenkel 32 der Stromschiene P2 auf der in Fig. 2 rechten Fläche der Stromschiene N anliegt. Ein zweiter Schenkel 34 der Stromschiene P1 deckt den Schenkel 32 ab. Ein zweiter Schenkel 36 der Stromschiene P2 liegt in Fig. 2 links neben dem Schenkel 30, d.h. sie deckt den Schenkel 30 ab. Damit wird die Stromschiene N von der unteren Seite her in Fig. 2 durch die Stromschiene P2 abgedeckt und von der Oberseite durch die Stromschiene P1. Durch Verstellung der Stromschiene P1 bzw. P2 in Vertikalrichtung läßt sich eine vorzugsweise einmalige Einjustierung vornehmen, um eine möglichst symmetrische Anordnung der einzelnen Stromschiene P1, P2 gegenüber der Stromschiene N zu erreichen und um auf diese Weise die Erzeugung eines Fehlers durch mangelnde Aufhebung der Magnetfelder, die durch den Sensor 26 erfaßt werden, zu minimieren. Die Justierung der Stromschienen P1, P2 erfolgt vorzugsweise vor dem endgültigen Zusammenbau des Geräts. Zur Fixierung der Stromschienen P1, P2 dienen in Fig. 2 nicht gezeigte Lagerblöcke.

Zwischen den Stromschienen P1, P2 und N sind in Fig. 2 nicht dargestellte Isolierungen ausgebildet.

Mit einem Fehlerstromschutzschalter der in Fig. 2 gezeigten Art werden Unterschiede in den durch die Stromschienen P1, P2, N erzeugten Magnetfeldern durch den Sensor 26 erfaßt und es wird ein Signal vom Sensor 26 an eine Auswerteschaltung 38 angelegt, die einen vorgegebenen Schwellwert entsprechend den vorstehend erwähnten 3 bis 4 A erfaßt und bei Überschreiten bzw. Unterschreiten des Schwellwertes das Relais 7 zur Öffnung der Schaltkontakte 5,6 erregt.

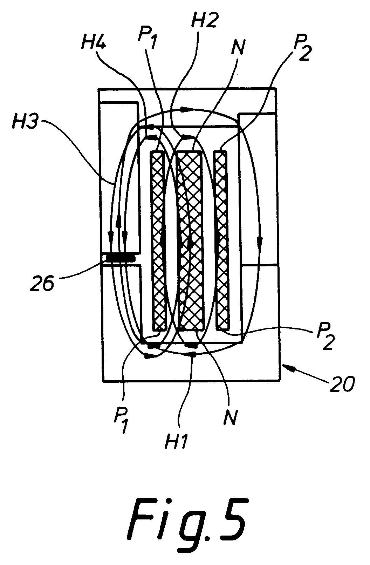

Fig. 5 zeigt eine gegenüber Fig. 2 unterschiedliche Anordnung der Stromschienen P1, P2 und N innerhalb eines Ferritkerns 20 zur besseren Erläuterung der Funktionsweise des erfindungsgemäßen Fehlerstromschutzschalters. Gemäß Fig. 5 ist die Stromschiene N mittig innerhalb des Ferritkerns 20 angeordnet, während sich die Stromschienen P1, P2 seitlich der Stromschiene N befinden. Dieser grundsätzliche Aufbau bewirkt, daß sich bei gleichem Stromfluß über die Stromschienen P1, P2 und entsprechendem doppelten Stromfluß über die Stromschiene N die entsprechenden Magnetfelder am Sensor 26 aufheben. In einem solchen Fall würde der Sensor 26 also kein Magnetfeld feststellen. Erprobungen haben aber gezeigt, daß bei einer Anordnung der Stromschienen entsprechend Fig. 5 ein Strom von 1000 A über die Stromschiene P1 fließen kann und der gleiche Strom von 1000 A über die Stromschiene N fließt. Durch die zueinander versetzt angeordneten Stromschienen P1, N, P2 ergibt sich dann, daß bei gleichem Stromfluß, d.h. bei 1000 A auf der Stromschiene P1 und 1000 A auf der Stromschiene N, sich die hierdurch erzeugten Magnetfelder H1 bis H4 am Sensor 26 tatsächlich nicht aufheben. Durch die innerhalb des Ferritkernes versetzte Anordnung der Stromschienen P1, P2, N wird daher bei einer Anordnung der in Fig. 5 gezeigten Art keine 100 %-ige Aufhebung der Magnetfelder gewährleistet, es wird also ein Sensorsignal erzeugt und der Fehlerstromschutzschalter unnötigerweise ausgelöst.

Die gegenüber Fig. 5 abgewandelte, erfindungsgemäße Anordnung von Stromschienen, wie sie in Fig. 2 gezeigt ist, erreicht dagegen eine sichere Erfassung von Fehlerströmen. Mit der Anordnung nach Fig. 2 ist gewährleistet, daß kein Fehlerstrom gemessen wird, d.h. daß sich die Magnetfelder am Sensor aufheben, wenn über die Stromschienen P1 und N jeweils die gleichen Ströme fließen. Gemäß der Erfindung sind die Stromschienen P1, P2 symmetrisch zur Stromschiene N angeordnet, was dadurch erreicht wird, daß die Stromschienen P1, P2 zumindest im Bereich des Ferritkernes U-förmig profiliert sind und die Stromschiene bzw. der Neutralleiter N von beiden Seiten her einfassen. Die Stromschienen P1, P2 sind daher um den Neutralleiter N herum angeordnet und aufeinander zu ineinander hineingeschoben.

Untersuchungen haben gezeigt, daß der erfindungsgemäße Fehlerstromschutzschalter, wie er in Fig. 2 gezeigt ist, den auftretenden Fehler minimiert.

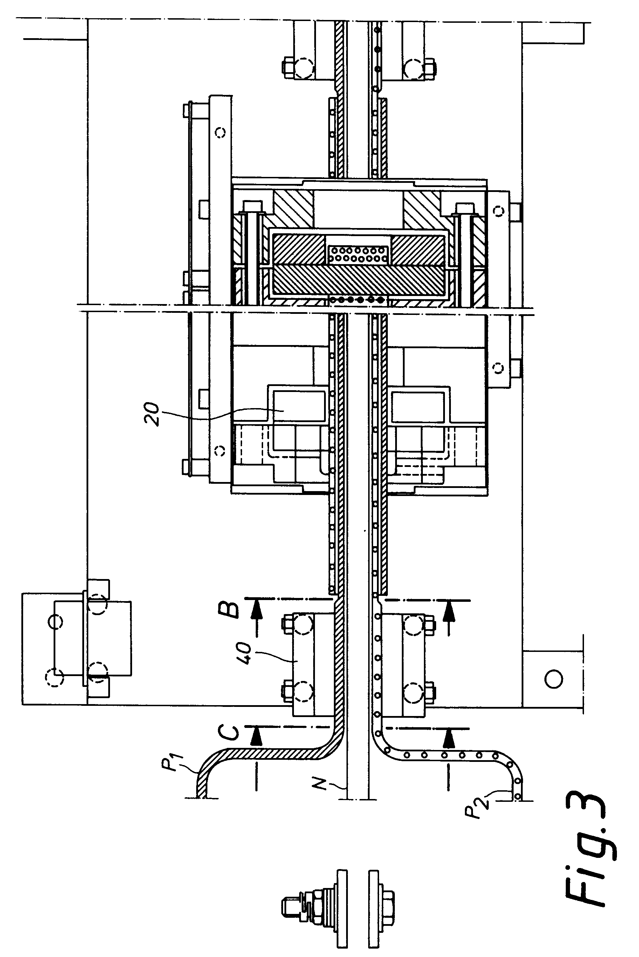

Fig. 3 veranschaulicht die Ausbildung der Stromschienen P1, P2 und N. Der Fehlerstromschutzschalter ist in Fig. 3 nur teilweise dargestellt. Die Stromschienen P1, P2, die aufgrund der Stromverhältnisse eingangsseitig kleineren Querschnitt haben als die Stromschiene N, haben bis zu einer bestimmten Stelle innerhalb des Fehlerstromschutzschalters "normalen" Querschnitt, d.h. rechteckigen Querschnitt und werden vorzugsweise durch einen Lagerblock 40 fixiert. Gegenüber der Stromschiene N sind die Stromschienen P1, P2 auseinandergespreizt, d.h. sie sind soweit zueinander beabstandet daß ein Anschluß an die zugeordneten, zugseitig befindlichen Stromschienen P1', P2' möglich ist. Die Stromschienen P1, P2 laufen in Richtung auf den Lagerblock 40 zusammen und werden durch ihn aufgenommen. Hinter dem Lagerblock 40 ändert sich das Profil der Stromschienen P1, P2 in ihre in Fig. 2 gezeigte U-förmige Konfiguration. Hinter dem mit 20 bezeichneten Ferritkern sind die Stromschienen P1, P2, N wiederum durch einen weiteren Lagerblock fixiert und verlaufen in der bereits beschriebenen Weise wieder auseinander, so daß an der Vorder- und Rückseite des Schalters die jeweiligen Anschlüsse zum zugseitigen Speisenetz herstellbar sind.

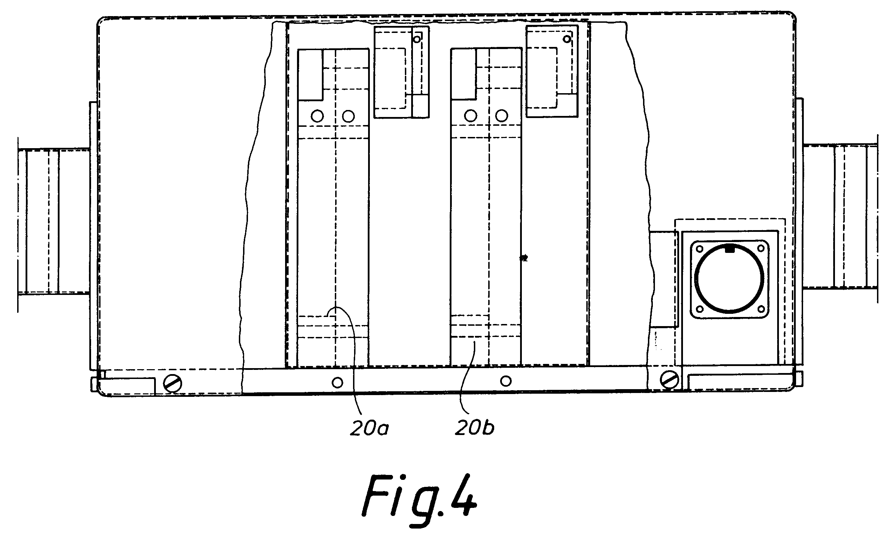

Gemäß einer weiteren Abwandlung des erfindungsgemäßen Fehlerstromschutzschalters kann dieser mit jeweils zwei Sätzen von Ferritkernen 20 bis 24 und Sensoren 26 ausgerüstet sein, um bei Ausfall eines Sensors 26 über den zweiten Sensor Fehlerströme zu erfassen. In einem solchen Fall ist die Anordnung von Ferritkern und Sensor in zur entsprechend Fig. 3 doppelten Ausführung vorgesehen. Diese Ausführungsform ist in Fig. 4 angedeutet, bei der in Teilschnittansicht zwei Ferritkerne 20a, 20b dargestellt sind.

Außerhalb der Bereiche, in welchen der oder die Ferritkerne liegen, sind die Stromschienen N, P1, P2 durch Aluminiumplatten eingebettet bzw. eingegossen, um sie in fester Anordnung innerhalb des Schalters zu fixieren.

Der erfindungsgemäße Fehlerstromschutzschalter weist im Bereich jedes Ferritkernes Stromschienen P1, P2 auf, welche den Neutralleiter N einmal von oben und einmal von unten einfassen, wobei die Stromschienen P1, P2 entlang ihres U-förmigen Profiles ineinander unter Umschließung der Stromschiene N verschachtelt sind. Hier tritt auch bei stark unsymmetrischer Stromverteilung kein Meßfehler auf.

Die bei hohen Fehlerströmen auftretenden Magnetisierungseffekte führen dazu, daß auch nach dem Stromdurchfluß die gesamte Anordnung magnetisiert bleibt. Zur Entmagnetisierung wird der Ferritkern 20 mit der Spule 28 versehen. Zur Entmagnetisierung der Anordnung wird eine Spannung, vorzugsweise die Speisespannung des Fehlerstromschutzschalters, an die Spule 28 angelegt.

## Patentansprüche

1. Fehlerstromschutzschalter, insbesondere für Speisekreise in Zügen,
gekennzeichnet durch einen Ferritkern (20), welcher einen Luftspalt (25) zur Aufnahme eines Sensors (26) enthält, wobei innerhalb des Ferritkerns (20) gegeneinander isolierte Stromschienen (P1, P2, N) angeordnet sind, von welchen eine Stromschiene (N) mittig zum Ferritkern (20) und die beiden weiteren Stromschienen (P1, P2) mit im wesentlichen U-förmigem Profil einander überlappend und die mittige Stromschiene (N) einschließend vorgesehen sind.

2. Fehlerstromschutzschalter, insbesondere für Speisekreise in Zügen, mit einem Sensor, der über eine Auswerteschaltung mit einem Relais oder dergleichen verbunden ist, welches in einem Stromkreis liegenden Schaltkontakte steuert,
gekennzeichnet durch einen Ferritkern (20), welcher einen Luftspalt (25) zur Aufnahme eines Sensors (26) enthält, wobei innerhalb des Ferritkerns (20) gegeneinander isolierte Stromschienen (P1, P2, N) angeordnet sind, von welchen eine Stromschiene (N) mittig zum Ferritkern (20) und die beiden weiteren Stromschienen (P1, P2) mit im wesentlichen U-förmigem Profil einander überlappend und die mittige Stromschiene (N) einschließend vorgesehen sind.

3. Fehlerstromschutzschalter nach Anspruch 1 oder 2, dadurch gekennzeichnet, daß das U-förmige Profil der Stromschienen (P1, P2) wenigstens über die Breite des Ferritkerns (20) vorhanden ist.

4. Fehlerstromschutzschalter nach einem der Ansprüche 1 bis 3, dadurch gekennzeichnet, daß ein Lagerblock zur Fixierung der Stromschienen (P1, P2, N) vorgesehen ist.

5. Fehlerstromschutzschalter nach wenigstens einem der vorangehenden Ansprüche, dadurch gekennzeichnet, daß zwei Ferritkerne (20a, 20b) mit jeweils einem Sensor (26) vorgesehen sind.

6. Fehlerstromschutzschalter nach wenigstens einem der vorangehenden Ansprüche, dadurch gekennzeichnet, daß auf dem Ferritkern (20) eine Entmagnetisierungsspule (28) vorgesehen ist.

7. Fehlerstromschutzschalter nach wenigstens einem der vorangehenden Ansprüche, dadurch gekennzeichnet, daß der Sensor (26) ein Hall-Sensor ist.

8. Fehlerstromschutzschalter nach wenigstens einem der vorangehenden Ansprüche, dadurch gekennzeichnet, daß der Sensor (26) an eine Auswerteschaltung (38) angeschlossen ist, welche mit einem Relais (7) verbunden ist.
